# EUROPEAN PATENT APPLICATION

(11) **EP 0 703 031 A1**
(43) Date of publication of application: **27.03.1996**
(21) Application number: 94830446.4
(22) Date of filing: 21.09.1994
(51) Int. Cl.: B23B 47/28

(54) **A device and method for carrying out a cylindrical bore having its axis parallel to a preexisting cylindrical bore and partially intersecting the same**

(71) Applicant: SAPORITI S.r.l., I-21058 Solbiate Olona (VA) (IT)
(72) Inventor: Saporiti, Silvano, I-21058 Solbiate Olona (VA) (IT)
(74) Representative: Marietti, Giuseppe

(57) **Abstract**

A device to perform in a metallic body (22) a cylindrical bore parallel to, and intersecting, a pre-existent cylindrical bore (25), comprises a supporting element (1) connected to a drilling tool (5) and capable of being slidingly inserted into the pre-existent bore (25) to guide the drilling tool along a direction that is parallel to the axis of the pre-existent bore.

A method is also envisaged comprising the execution of a first cylindrical bore (25) and then the execution of a second cylindrical bore using a tool (9) axially guided by means of a device (1) sliding within the first bore (25).

## Description

The present invention concerns a method and a device to perform precision drilling and, particularly, to perform in a metallic body a cylindrical bore having axis parallel to a pre-existent cylindrical bore in such a position as to partially intersect the pre-existent bore.

An example of application of the present invention concerns the drilling of extrusion cylinders for double-screw extruders, generally obtained from a block of metallic material, for which it is necessary to perform two cylindrical through-bores having parallel axes and internal recesses intersecting for their whole length along diretrices parallel to their axes, namely cylindrical bores with a distance between their centers that is lower than the sum of their respective radiuses.

The presently used techniques envisage the drilling of one of the two bores for the whole length of the metallic body, a reaming operation and a possible lapping operation of the internal surface of the bore thus obtained. Before performing the second bore, a so-called core is introduced into the first bore, consisting of a solid cylindrical piece made of metal as well, so as to avoid damages to the pre-existent bore during the execution of the second bore, operation during which a portion of the core is actually removed.

This operation, however, though necessary to avoid damages to the surface of the first bore, jeopardizes the precision in the parallel alignment of the two bores, since the core often prevents the correct forward movement of the drilling tool into the metallic body causing faults in the parallelism between the axes of the two bores.

Typically, for bores of 3-4 meters in length and 100 millimeters in diameter, errors of parallelism between axes of several tenths of millimeter are found, which then cause the wear of the extrusion screws and of the surfaces of the bores themselves with consequent deterioration of the extruder performance.

The known technique, besides being unsatisfactory from the precision point of view, proves particularly expensive since cores must necessarily be made with a certain degree of accuracy and precision, though they only are accessory elements to the working process. For this reason each core may even be re-used until it includes such a solid portion as to ensure the superficial continuity between the first bore, where it is inserted, and the second bore to be drilled. The reutilization of the core allows to at least partly reduce production costs, but it furtherly jeopardizes the working precision.

The task of the present invention is that of solving the inconveniences of the known technique.

Within this task, an object consists in obtaining a drilling device allowing to reduce, or even eliminate, the errors of parallelism between the axis of a pre-existent bore and the axis of a bore that is drilled intersecting at least partially the pre-existent bore.

Another object of the present invention is that of obtaining a drilling device allowing to perform in an easy and economic way a bore having axis parallel to a pre-existent bore and in such a position as to intersect at least partially the pre-existent bore.

These objectss are achieved by means of the present invention that concerns a device to perform in a metallic body a cylindrical bore having axis parallel to a pre-existent cylindrical bore in position of partial intersection with said pre-existent bore along directrices parallel to the axes, characterized in that it includes at least a supporting element connected to a drilling tool and suitable to be slidingly introduced into said pre-existent bore to guide said drilling tool along a direction parallel to the axis of said pre-existent bore.

The supporting element allows to guide the drilling tool along a direction perfectly parallel to the pre-existent bore, thus reducing errors of parallelism between the axes of the bores.

Furthermore, the second bore is drilled without using the so-called core, thus allowing to considerably reduce the production costs versus the known technique.

In particular, the supporting element has a substantially cylindrical shape with a concave side portion in correspondence to which a cylindrical guiding bush is fixed, aligned with axis parallel to the supporting element axis. The guiding bush is coaxial to the rotating drive hollow shaft of the drilling tool and is positioned externally to the shaft that rotates in respect thereto, the guiding bush being on its turn sliding with minimum clearance inside the bore under execution.

The guiding bush is located on the drive hollow shaft in proximity to the drilling tool so as to guarantee the highest precision of the drilling tool forward movement inside the metallic body.

The strength necessary to the progress of the tool guiding support is applied by means of a thrust ring provided on the drive hollow shaft of the drilling tool coaxially to the guiding bush and acting on the annular edge of the bush itself opposite to the one near the drilling tool. The latter instead is pushed directly by the drive hollow shaft of the drilling tool as generally occurs in all machines for deep drilling.

The drilling tool is positioned sideways to the supporting element and partially housed in said concave side portion thereof in a way that the distance between the center of the supporting element and the center of the drilling tool is lower than the sum of their respective maximum radiuses.

The supporting element moreover includes a head section placed before the concave portion and therefore before the drilling tool in respect to the progress direction of the drilling tool. This allows to correctly position the device and the drilling tool before the point of the tool itself comes in contact with the external surface of the metallic body where the second bore must be performed.

The head portion comprises a bevel in correspondence to the front end edge to facilitate the introduction of the device into the pre-existent bore before starting the execution of the second bore.

There is moreover provided an insert removably fixed to the supporting element to connect the cylindrical surface of the head portion with the surface of the concave portion on the supporting element in the nearest possible position to the front profile of said drilling tool. This allows to constantly keep a solid body inside the pre-existent bore in the vicinity of the action area of the material and thus to avoid possible damages to the pre-existent bore during the drilling of the second bore.

According to an advantageous feature of the invention, the supporting element comprises in its inside a duct in communication with the concave portion in the vicinity of the drilling tool. The duct is open in correspondence to the back end of the supporting element to allow the passage of oil under pressure that is used to eliminate the chips of material removed from the metallic body during the drilling operation.

The device according to the invention furtherly comprises a guiding block capable of being fixed in a removable way against the surface of the metallic body to be drilled in order to facilitate the introduction of the supporting element and the drilling tool in the initial stage of the execution of the second bore. In fact the guiding block is provided with a couple of cylindrical bores, one of which has the same diameter as the pre-existent bore and is perfectly aligned therewith, while the other has the same diameter as the maximum diameter of the drilling tool and is perfectly aligned with its axis of rotation.

The invention also concerns a method to perform in a metallic body a couple of cylindrical bores having reciprocally parallel axes and partial intersection between each other along directrices parallel to axes, characterized in that it comprises the following steps:
- performing a first cylindrical bore having diameter lower than or equal to the diameter of one of the two bores that must be performed; and
- performing a second cylindrical bore using a tool axially guided along a direction that is parallel to the axis of said pre-existent bore by means of a device sliding within said pre-existent bore.

It is therefore possible to obtain a couple of perfectly parallel bores in an easy and certainly more economic way in comparison with the known technique.

These and other advantages will become more evident from the description of the invention and from the accompanying drawings given with illustrative and not limiting purposes, where:
- figure 1 is a longitudinal section of a drilling device according to the present invention;
- figure 2 is a view of the device of figure 1 in disassembled condition and in cross section in respect to the plan A-A of figure 1; and
- figure 3 is a longitudinal section of the device of figure 1 in the initial stage of the execution of the second bore.

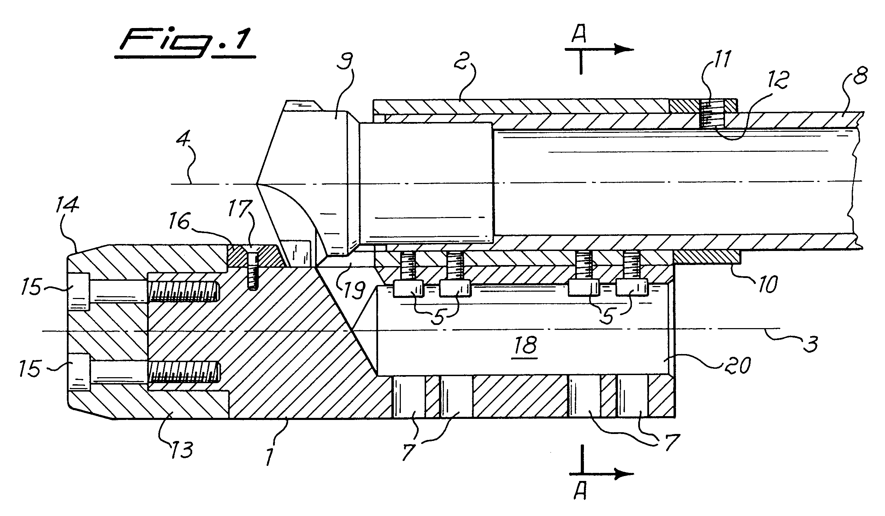

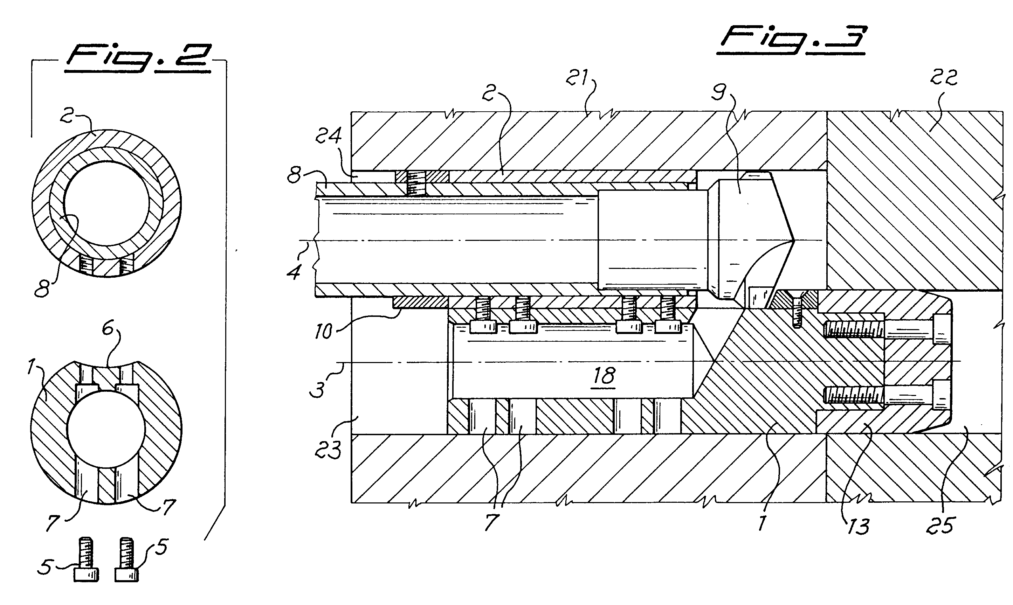

With reference first of all to figures 1 and 2, the device according to the invention comprises a supporting element 1 having substantially cylindrical shape and a guiding bush 2, cylindrical as well, aligned with its axis 4 parallel to the axis 3 of the supporting element 1.

The guiding bush 2 is fixed to the supporting element 1 by means of screws or bolts 5 and is positioned in correspondence to a concave side portion 5 (fig. 2) having such shape and size as to guarantee the perfect contact between a portion of the external surface of the bush 2 and the internal surface of the concave portion 6. The supporting element 1 also comprises a series of bores 7 axially aligned with screws 5 to allow the passage of appropriate fixing means for the screws themselves.

The guiding bush 2 is positioned externally to the rotating drive hollow shaft 8 of a drilling tool 9 and is coaxial to the shaft 8 which rotates in respect thereto.

The guiding bush 2 moreover has such a maximum external diameter as to allow its own sliding movement with minimum clearance inside the bore to be performed and is positioneded in proximity of the drilling tool 9 to ensure the highest precision in the progress of the tool 9 itself and to provide the device as a whole with compactness.

The drilling tool 9, that rotates integral to the hollow shaft 8, is on its turn positioned sideways to the supporting element 1 and is partially housed in the concave side portion 6 in a way that the distance between the center of the supporting element 1 and the center of the drilling tool 9 is lower than the sum of their respective maximum radiuses.

The progress strength of the device is applied to the bush 2 by means of a thrust ring 10, coaxial to the bush 2, that acts on the bush 2 in correspondence to the annular edge opposite to the one in the vicinity of the drilling tool 9. The thrust ring 10 is made integral to the hollow shaft 8 by known means that must not be projecting in respect to the external profile of the thrust ring 10 or of the guiding bush 2, for instance using a grub screw (not shown) inserted into the threaded bores 11 and 12 provided in the thrust ring 10 and in the shaft 8 respectively and reciprocally aligned.

The supporting element 1 includes a head portion 13, having substantially cylindrical shape, positioned on the front part of the concave portion 6 in respect to the progress direction of the drilling tool 9 and provided with a bevel 14 in correspondence to its front end edge to facilitate the insertion of the supporting element 1 into the pre-existent bore. The head portion 13 is removably fixed to the supporting element 1 by means of screws 15 and can be removed to facilitate the insertion or removal of the drilling tool 9.

Between the head portion 13 and the drilling tool 9 there is also provided an insert 16, removably fixed by means of a screw 17, to connect the cylindrical surface of the head portion 13 with the surface of the concave portion 6 on the supporting element 1 in the nearest possible position to the front profile of the drilling tool 9. This allows to constantly keep a solid body in the pre-existent bore in proximity of the action area of the drilling tool 9, thus avoiding possible damages to the surface of the pre-existent bore during the execution of the second bore.

The shape and size of the insert 16 can vary to allow the use of the device with different drilling tools, simultaneously keeping the continuity of the cylindrical surface as far as a position immediately near the drilling tool. Inside the supporting element 1 there is provided a duct 18 in communication with the concave portion 6 through a port 19 in proximity of the drilling tool 9. The duct 18 is open in correspondence to the back end 20 of the supporting element 1 to allow the passage of oil under pressure that is used to discarge the chips through the bore of the hollow shaft 8.

With reference now to figure 3 illustrating the initial stage of execution of the second bore, the device furtherly includes a guiding block 21 that is removably fixed against the surface of the metallic body 22 to be drilled. The guiding block 21 is provided with a couple of cylindrical bores 23, 24 with reciprocally parallel axes 3, 4 and partial intersection with one another along directrices parallel to the axes themselves. In particular, the bore 23 has the same diameter as the pre-existent bore 25 and is perfectly aligned therewith along the common axis 3, while the bore 24 has the same diameter as the maximum diameter of the drilling tool 9 and is perfectly aligned with its axis of rotation 4 that coincides with the axis of the bore under execution.

The guiding block 21 allows to correctly insert the supporting element 1 into the pre-existent bore 25 before the drilling tool 9 comes into contact with the external surface of the body to be drilled 22.

The invention also envisages a method to perform in a metallic body a couple of cylindrical bores with reciprocally parallel axes and partial intersection between one another along directrices parallel to the axes themselves. The method first of all includes the performance of a first cylindrical bore having diameter lower than or equal to the diameter of one of the two bores that must be executed, then the performance of a second cylindrical bore using a tool axially guided along a direction parallel to the axis of the first bore by means of a device sliding therein.

Preferably, the first bore is performed with a slightly lower diameter than the foreseen one and is then submitted to reaming and lapping operations before the second bore is performed. In particular, the reaming operation is performed by moving the reaming tool in the opposite direction to that of the drilling tool. In other words, once the drilling tool 9 is gone out of the opposite side of the body 22 ending the first bore, at the end of the hollow shaft 8 a reaming tool is substituted to the drilling tool 9 shown in figures and the reaming tool is guided in the opposite direction to that of progress of the drilling tool.

To perform the second bore a device like the one shown for instance in figures 1-3 is used with the supporting element 1 having cylindrical shape and such a diameter as to allow its sliding with minimum clearance within the bore 25.

Considering again figure 3, the method envisages the removable fixing of a guiding block 21 against the surface of the metallic body 22 before executing the second bore.

The guiding block 21 allows the insertion of the supporting element 1 into the bore 25 in a position correctly aligned with the drilling direction before the drilling tool 9 comes in contact with the external surface of the body to be drilled 22.

In this case too, the internal surface of the second bore is submitted to a reaming operation by moving the reaming tool in opposite direction in respect to that of the drilling tool.

During the reaming of the second bore, the reaming tool is preferably guided by means of the same sliding device used for the execution of the second bore, thus ensuring a high working precision.

A possible lapping operation, often necessary to obtain the required level of finishing, can be performed on the first bore after the reaming operation and before the execution of the second bore, or on both bores after the reaming of the second bore has been completed.

## Claims

1. Device to perform in a metallic body a cylindrical bore with axis parallel to a pre-existent cylindrical bore in position of partial intersection with said pre-existent bore along directrices parallel to axes, characterized in that it comprises at least a supporting element connected with a drilling tool and capable to be slidingly inserted into said pre-existent bore to guide said drilling tool along a direction parallel to the axis of said pre-existent bore.

2. Device according to claim 1, characterized in that said supporting element has substantially cylindrical shape with a concave side portion in correspondence to which a guiding bush, cylindrical too, is fixed, aligned with the axis parallel to the axis of said supporting element, said bush being coaxial to the rotating drive hollow shaft of the drilling tool and being positioned externally to said shaft which turns in respect thereto, said bush being sliding with minimum clearance inside the bore under execution.

3. Device according to claim 1 or 2, characterized in that said guiding bush is positioned on said drive hollow shaft in the vicinity of said drilling tool.

4. Device according to any of the preceding claims, characterized in that it comprises a thrust ring coaxial to said guiding bush and acting on the annular edge of said bush opposite to the one in proximity of said drilling tool.

5. Device according to any of the preceding claims, characterized in that said drilling tool is positioned sideways to said supporting element and partially housed inside said concave side portion in a way that the distance between the center of said supporting element and the center of said drilling tool is lower than the sum of their respective maximum radiuses.

6. Device according to any of the preceding claims, characterized in that said supporting element comprises a head portion, removably fixed, and placed before said concave portion in respect to the progress direction of said drilling tool, said head portion having substantially cylindrical shape with a bevel in correspondence to the front end edge.

7. Device according to any of the preceding claims, characterized in that it comprises an insert removably fixed to said supporting element to connect the cylindrical surface of said head portion with the surface of said concave portion on the supporting element in the nearest possible position to the front profile of said drilling tool.

8. Device according to any of the preceding claims, characterized in that said supporting element comprises inside itself a duct in communication with said concave portion in proximity of said drilling tool, said duct being open in correspondence to the back end of said supporting element to allow the passage of oil under pressure capable of eliminating the chips of removed material through the bore of the rotating drive hollow shaft of said tool.

9. Device according to any of the preceding claims, characterized in that it furtherly comprises a guiding block capable of being removably fixed against the surface of the metallic body to be drilled, said guiding block being provided with a couple of cylindrical bores, one of which has the same diameter as said pre-existent bore and is perfectly aligned therewith, and the other has the same diameter as the maximum diameter of the drilling tool and is perfectly aligned with its axis of rotation.

10. Method to perform in a metallic body a couple of cylindrical bores with reciprocally parallel axes and partial intersection between one another along directrices parallel to their axes, characterized in that it comprises the following steps:
- performing a first cylindrical bore having diameter lower than or equal to the diameter of one of the two bores that must be executed; and
- performing a second cylindrical bore using a tool axially guided along a direction parallel to the axis of said pre-existent bore by means of a device sliding within said pre-existent bore.

11. Method according to claim 10, characterized in that it comprises a reaming operation of said first bore before the execution of the second one, said reaming operation being carried out by moving the reaming tool in opposite direction in respect to that of the drilling tool.

12. Method according to claim 11, characterized in that it comprises a reaming operation of said second bore, said operation being carried out by moving the reaming tool in opposite direction in respect to that of the drilling tool.

13. Method according to claim 12, characterized in that the reaming operation of said second bore is carried out by using a tool axially guided along a direction parallel to that of said first bore by means of a device sliding within said first bore.

14. Method according to any of the claims 10 to 13, characterized in that it comprises the fixing of a guiding block against the surface of the metallic body before executing said second bore, said guiding block being provided with a couple of cylindrical bores of which one has the same diameter as said pre-existent bore and is perfectly aligned therewith, the other has the same diameter as the maximum diameter of the drilling tool and is perfectly aligned with its axis of rotation.

15. Method according to claim 14, characterized in that, before starting the execution of said second bore, the device to be slidingly inerted into said pre-existent bore and the drilling tool are introduced into the corresponding bores of said guiding block to favour the correct alignment of the drilling tool in the initial stage of the execution of said second bore.

16. Method according to any of the claims 10 to 15, characterized in that a lapping operation of the surfaces of said bores is performed.
